(19) Europäisches Patentamt / European Patent Office / Office européen des brevets

(11) **EP 4 437 019 B1**

(12) **EUROPEAN PATENT SPECIFICATION**

(45) Date of publication and mention of the grant of the patent:
**20.08.2025 Bulletin 2025/34**

(21) Application number: **22850614.3**

(22) Date of filing: **18.11.2022**

(51) International Patent Classification (IPC):
***C08F 265/02*** *(2006.01)* ***C08F 285/00*** *(2006.01)*
***C08F 2/26*** *(2006.01)* ***C08F 2/38*** *(2006.01)*
***C08F 6/00*** *(2006.01)*

(52) Cooperative Patent Classification (CPC):
(C-Sets available)
**C08F 265/04; C08F 2/26; C08F 6/006;**
**C08F 265/02; C08F 285/00** (Cont.)

(86) International application number:
**PCT/US2022/050365**

(87) International publication number:
**WO 2023/091641 (25.05.2023 Gazette 2023/21)**

(54) **METHOD FOR PREPARING OPACIFYING PIGMENT-BINDER HYBRID POLYMER PARTICLES**

VERFAHREN ZUR HERSTELLUNG TRÜBENDER PIGMENTBINDEMITTEL-HYBRIDPOLYMERPARTIKEL

PROCÉDÉ DE PRÉPARATION DE PARTICULES DE POLYMÈRE HYBRIDE LIANT UN PIGMENT OPACIFIANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.11.2021 US 202163281761 P**

(43) Date of publication of application:
**02.10.2024 Bulletin 2024/40**

(73) Proprietor: **Rohm and Haas Company**
**Collegeville, PA 19426 (US)**

(72) Inventor: **LEONARD, Michael W.**
**Collegeville, Pennsylvania 19426 (US)**

(74) Representative: **Beck Greener LLP**
**Fulwood House**
**12 Fulwood Place**
**London WC1V 6HR (GB)**

(56) References cited:

| | |
|---|---|
| **EP-A1- 0 915 108** | **EP-A1- 3 031 837** |
| **EP-A1- 3 620 493** | **WO-A1-2020/205332** |
| **WO-A1-2021/225769** | **CN-A- 112 409 530** |
| **US-A- 5 053 441** | **US-B2- 10 919 999** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 6/006, C08L 51/003;**
**C08F 265/02, C08F 212/08, C08F 220/06, C08F 220/44, C08F 212/36;**
**C08F 265/02, C08F 212/08, C08F 220/14, C08F 222/103;**
**C08F 265/04, C08F 212/08, C08F 220/06, C08F 220/44, C08F 212/36;**
**C08F 265/04, C08F 212/08, C08F 220/14, C08F 222/103;**
**C08F 285/00, C08F 220/1804, C08F 220/14, C08F 220/1808, C08F 220/282, C08F 220/06**

## Description

### Background of the Invention

The present invention relates to a method for preparing opacifying pigment-binder hybrid particles.

Opaque polymers (OPs) are organic opacifying pigment particles that help reduce the loading of titanium dioxide ($TiO_2$) in paint formulations. (See US 6,020,435 and US 10,919,999.) OPs coated with film-forming binder particles (opacifying pigment-binder hybrid polymer particles), for example, opaque acrylic polymers (OAPs) as disclosed in US 7,629,414 B2, have been reported to provide increased opacity when incorporated into coatings formulations. A critical step in the process for preparing OPs and OAPs is a particle swelling step that is carried out under conditions of no substantial polymerization of monomer, whereby the free radical content is so low that the concentration of standing monomer in the reaction vessel remains fairly constant over a designated period of time. The condition of no substantial polymerization is accomplished most commonly with a polymerization inhibitor such as 4-hydroxy TEMPO, α-methyl styrene, hydroquinone, *t*-butyl-p-hydroquinone, 2,5-di *t*-butyl-p-hydroquinone, or 4-*t*-butyl catechol. (See US 6,020,435, col. 7, lines 29-67 and col. 8, lines 1-38.) Without inhibition of polymerization in the swelling step, the core of the OPs have a propensity to drift from the center, thereby creating non-uniformity of film thickness; the consequent formation of thinner portions in the shell induces collapse of the opaque polymer particles during the polymerization process.

WO2021/225769 discloses a waterborne composition comprising an aqueous dispersion of first and second multi-stage polymer particles, wherein each of the first and second polymer particles comprises a water-occluded core and a high $T_g$ polymeric shell wherein the second multistage polymeric particles further comprise a polymeric binder layer superposing the shell.

Unfortunately, the introduction of a polymerization inhibitors presents two drawbacks to large scale production of opacifying pigment-binder hybrid polymer particles. First, the batch time is protracted by at least an hour; second, the batch size is limited for safety concerns. It would therefore be an advance in the art of organic opacifying pigment particles, more particularly OAPs, to discover a way to reduce batch time and increase batch size safely.

### Summary of the Invention

The present invention addresses a need in the art by providing a method for preparing an aqueous dispersion of opacifying pigment-binder hybrid particles comprising the steps of a) contacting under aqueous emulsion polymerization conditions carboxylic acid functionalized core polymer particles with one or more first ethylenically unsaturated monomers to form an aqueous dispersion of core-shell polymer particles; b) chasing residual first ethylenically unsaturated monomers with a chasing agent; c) gradually adding to the dispersion of core-shell polymer particles under emulsion polymerization conditions i) second ethylenically unsaturated monomers from a first vessel; and ii) a base from a second vessel to form a dispersion of pigment-binder hybrid polymer particles; wherein the addition of the base is initiated after the onset of the addition of the second ethylenically unsaturated monomers, and completed before the completion of the addition of the second ethylenically unsaturated monomers; wherein step c) is carried out without inhibition of polymerization.

The process of the present invention has been found suitable for making opacifying pigment-binder hybrid particles with acceptable collapse resistance and hiding properties.

### Detailed Description of the Invention

The present invention is a method for preparing an aqueous dispersion of opacifying pigment-binder hybrid particles comprising the steps of a) contacting under aqueous emulsion polymerization conditions carboxylic acid functionalized core polymer particles with one or more first ethylenically unsaturated monomers to form an aqueous dispersion of core-shell polymer particles; b) chasing residual first ethylenically unsaturated monomers with a chasing agent; c) gradually adding to the dispersion of core-shell polymer particles under aqueous emulsion polymerization conditions i) second ethylenically unsaturated monomers from a first vessel; and ii) a base from a second vessel to form a dispersion of pigment-binder hybrid polymer particles; wherein the addition of the base is initiated after the onset of the addition of the second ethylenically unsaturated monomers, and completed before the completion of the addition of the second ethylenically unsaturated monomers; wherein step c) is carried out without inhibition of polymerization.

The carboxylic acid functionalized core polymer particles can be prepared as disclosed in US 6,020,435, Examples 1-16. The core preferably comprises from 20, or from 25, or from 30, or from 32 weight percent, to preferably 60, or to 50, or to 40, or 36 weight percent structural units of a carboxylic acid monomer or a salt thereof, based on the weight of structural units of monomers in the core.

As used herein, the term "structural units" refers to the remnant of the recited monomer after polymerization. For example, a structural unit of methacrylic acid is as illustrated:

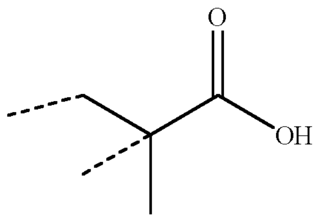

structural unit of methacrylic acid

Examples of suitable carboxylic acid monomers include acrylic acid, methacrylic acid, itaconic acid, and maleic acid. It is also possible for structural units of a carboxylic acid monomer to arise from copolymerization of an ester, followed by hydrolysis.

The core further comprises preferably from 40, or from 50, or from 55, or from 60, or from 64 weight percent to preferably 80, or to 75, or to 70, or to 68 weight percent structural units of one or more nonionic monoethylenically unsaturated monomer based on the weight of structural units of monomers in the core. Examples of nonionic monoethylenically unsaturated monomers include one or more acrylates and/or methacrylates such as methyl acrylate, ethyl acrylate, *n*-butyl acrylate, *t*-butyl acrylate 2-ethylhexyl acrylate, methyl methacrylate, *n*-butyl methacrylate, *t*-butyl methacrylate, isobutyl methacrylate, isobornyl methacrylate, lauryl methacrylate, and cyclohexyl methacrylate; and one or more monoethylenically unsaturated aromatic compounds such as styrene, α-methylstyrene, and 4-*t*-butylstyrene. A preferred nonionic monoethylenically unsaturated monomer is methyl methacrylate.

In the first step of the process of the present invention, the carboxylic acid functionalized core polymer particles are contacted with one or more first ethylenically unsaturated monomers in a reactor vessel under emulsion polymerization conditions to form an aqueous dispersion of core-shell polymer particles.

The first ethylenically unsaturated monomers form a shell around the core polymer particles. The first ethylenically unsaturated monomers are selected to achieve a shell with a calculated $T_g$ in the range of from than 80 °C or 90 °C, to 110 °C. As used herein, calculated $T_g$ refers to the glass transition temperature as calculated by the Fox equation.

Suitable first ethylenically unsaturated monomers include methyl methacrylate, styrene, α-methylstyrene, isobornyl methacrylate, lauryl methacrylate, or cyclohexyl methacrylate. In a first aspect, the first ethylenically unsaturated monomers comprise from 70 to 94 weight percent styrene, from 2 to 25 weight percent acrylonitrile, from 0.5 to 3 weight percent acrylic acid or methacrylic acid, and from 0.5 to 5 weight percent of a diethylenically unsaturated monomer such as allyl methacrylate (ALMA), divinyl benzene (DVB), trimethylolpropane trimethacrylate (TMPTMA), or trimethylolpropane triacrylate (TMPTA).

In a second aspect of the invention, the first ethylenically unsaturated monomers comprise methyl methacrylate and styrene at a weight-to-weight ratio of from 35:65, or from 40:60, to 55:45 or to 50:50, wherein methyl methacrylate and styrene comprise at least 90 weight percent of the first ethylenically unsaturated monomers. In this second aspect, the first ethylenically unsaturated monomers further comprise from 0.5 or from 1 or from 2 weight percent, to 5 or to 4 weight percent trimethylolpropane trimethacrylate, based on the weight of the second ethylenically unsaturated monomers. In this aspect of the invention, the first ethylenically unsaturated monomers preferably comprise less than 2, or less than 1 or less than 0.5 or less than 0.1 or 0 weight percent of both AN and DVB.

Residual unreacted first ethylenically unsaturated monomers are chased (consumed) with a suitable chasing agent such as the redox couple t-butylhydroperoxide and isoascorbic acid. Then, second ethylenically unsaturated monomers are gradually added to the reactor vessel. Suitable second ethylenically unsaturated monomers include monomers that are capable of forming a binder layer having a calculated $T_g$ as measured by the Fox equation of not greater than 35 ° or not greater than 25 °C, or not greater than 15 °C, and not less than -20 °C, or not less than -10 °C. Examples of combinations of monomers include styrene or methyl methacrylate and one or more acrylates such as methyl acrylate, ethyl acrylate, n-butyl acrylate, or 2-ethylhexyl acrylate. The second ethylenically unsaturated monomers may further comprise acetoacetoxyethyl methacrylate (AAEM), carboxylic acid monomers, sulfonic acid monomers, and phosphorus acid monomers.

After the onset of addition of the second ethylenically unsaturated monomers, generally on the order of from 15 minutes or from 30 minutes to 60 minutes, a base is gradually added to the reactor vessel from a separate source. Sufficient base is added to raise the pH of the core to above 6 or above 7. Examples of suitable bases include $NH_4OH$, LiOH, NaOH, and KOH. The addition of the base is completed before the addition of the second ethylenically unsaturated monomer is completed. This step induces particle swelling and concomitant introduction of a binder layer around surface of the core-shell polymer particles, and is carried out without inhibition of polymerization, in other words, in the absence of a polymerization inhibitor.

As used herein, "absence of a polymerization inhibitor" means that insufficient amount (including no amount) of polymerization inhibitor is added prior to or during the introduction of the base to measurably impact the rate of

polymerization.

The weight-to-weight ratio of the carboxylic acid functionalized core polymer particles to the first ethylenically unsaturated monomers is preferably in the range of from 1:12 to 1:16. The weight-to-weight ratio of the second ethylenically unsaturated monomers to the sum of the first ethylenically unsaturated monomers and the carboxylic acid functionalized core polymer particles is in the range of from 1:1, or from 1.2:1, or from 1.5:1, to 3.5:1, or to 3.0:1, or to 2.5:1, or to 2.2:1, or to 2.0:1.

The z-average particle size of the opacifying pigment-binder hybrid particles, preferably OAP particles, is in the range of from 300 nm, or from 400 nm, or from 450 nm, or from 475 nm, to 750 nm, or to 700 nm, more preferably 600 nm, and most preferably to 550 nm. As used herein, z-average particle size refers to particle size as determined by dynamic light scattering, for example using a BI-90 Plus Particle Size Analyzer (Brookhaven).

It has been demonstrated that batch times can be reduced by over an hour and kettle capacity increased by almost 40% when a process for preparing an aqueous dispersion of opacifying pigment-binder hybrid particles is used that does not require swelling in the substantial absence of polymerization. Moreover, it has surprisingly been discovered that the desired properties can be achieved without inhibition of polymerization in the swelling step.

Examples

Kubelka-Munk Scattering Coefficient Measurement

The scattering coefficient (S/Mil) is a measure of the opacity of the OAPs. A sample of aqueous dispersion of OAPs was blended with RHOPLEX™ AC-264 Emulsion Polymer (AC-264, A Trademark of The Dow Chemical Company or its Affiliates) at a weight-to-weight ratio of 15:85 OAP:AC-264 based on solids. A 7-mil wet film of the blend was drawn over a sheet of black vinyl that was measured for thickness in four small defined areas with an Ames Gauge. The film was dried for 2 h at low relative humidity (<40% R.H.). The reflectance of the dry film was measured by a Gardner Instrument Reflectometer over the four defined areas. The thickness of the dried film was also determined over the same defined areas using the Ames Gauge. The Scattering coefficient was calculated for each of defined areas as:

$$\text{S/mil} = 1 - \left(\frac{R}{(1-R) \times T}\right) \times 100$$

where R is Reflectance and T is film thickness in mils. The four S/Mil measurements were then averaged to obtain the S/Mil for the film.

Collapse

Collapse is an indication of the ability of an opaque polymer to resist the forces of drying acting on the walls of the internal micro void. These forces are greatest at high humidity, which causes the particles to dry slowly. Collapse is determined using essentially the same procedure that is used in determining S/Mil above except that a second drawdown is dried overnight at 75% R.H., then dried at <40% R.H. for 1 h.

$$\% \text{ Collapse} = 1 - \left(\frac{\text{High humidity S/mil}}{\text{Low humidity S/mil}}\right) \times 100$$

In the following Examples, Core #1 refers to an aqueous dispersion of polymer particles (66 MMA/34 MAA, solids 32.0%, z-average particle size of 135 nm) prepared substantially as described in US 6,020,435.

Comparative Example 1 - Preparation of AN-Functionalized OAP with 4-Hydroxy TEMPO Inhibition

A 5-liter, four necked round bottom flask was equipped a paddle stirrer, thermometer, $N_2$ inlet and reflux condenser. DI water (475 g) was added to the flask and heated to 89 °C under $N_2$. Sodium persulfate (NaPS, 3 g in 25 g water) was added to flask immediately followed by Core #1 (125 g). Monomer emulsion 1 (ME 1), which was prepared by mixing DI water (125.0 g), Disponil FES-32 emulsifier (FES-32, 10.0 g), styrene (424.2 g), methacrylic acid (7.0 g), linseed oil fatty acid (2.8 g), acrylonitrile (AN, 112.0 g), and divinyl benzene (DVB, 14.0 g), was then added to the flask over

45 min. The temperature of the reaction mixture was allowed to increase to 84 °C after 15 min and allowed to increase to 92 °C after 25 min. Two minutes after the start of ME 1 addition, a solution of methacrylic acid (5.6 g) in DI water (40 g) was added to the flask. Upon completion of the ME 1 addition, the reaction was cooled to 60 °C.

When the contents of the flask reached 80 °C., an aqueous mixture of ferrous sulfate and EDTA (20 g, 0.1 wt. % $FeSO_4$, and 2 g, 1 wt. % EDTA) was added to the flask. When the flask temperature reached 60 °C, co-feeds including a solution of *t*-butylhydroperoxide (*t*-BHP 1.9 g) and NaPS (5.0 g) mixed with DI water (100 g), along with a separate solution of isoascorbic acid (IAA, 2.6 g in 100 g water) were both added simultaneously to the flask at 1.2 g/mins. Two min after the start of charging the co-feed solutions, ME 2, which was prepared by mixing DI water (240 g), FES-32 emulsifier (17.0 g), *n*-butyl acrylate (431.46 g), methyl methacrylate (430.5 g), 2-ethylhexyl acrylate (124.4 g), acetoacetoxyethyl methacrylate (25.5 g) and methacrylic acid (8.0 g), was added to the flask over 55 min while allowing the temperature to rise to 86 °C without providing any external heat. Upon completion of ME 2 addition, the co-feed solutions were stopped and the batch was held for 5 min at 80 °C to 86°C. A solution of $NH_4OH$ (5 g, 28 wt. % aq.) mixed with DI water (5.0 g) was then added to the flask along with hot (90 °C) DI water (175 g).

ME 3, which was prepared by mixing DI water (54.0 g), FES-32 emulsifier (3.0 g), *n*-butyl acrylate (104.4 g), methyl methacrylate (75.6 g), and 4-hydroxy TEMPO (3.0 g), was fed to the flask over 5 min. Immediately after the ME 3 feed addition was complete, $NH_4OH$ (35.0 g, 28 wt. % aq.) mixed with DI water (35 g) was added to the flask over 2 min. When $NH_4OH$ addition was complete, the batch was held for 5 min. The addition the co-feed solutions was resumed at 1.2 g/min until completion, whereupon the dispersion was cooled to 25 °C. While cooling, additional co-feeds including a solution of *t*-BHP (1.5 g) in DI water (25 g), along with a separate solution of IAA (0.7 g) in water (25 g) were both added simultaneously to the flask at a rate of 1.30 g/min. Upon completion of addition of the second co-feed, the dispersion was filtered to remove any coagulum. The filtered opaque acrylic dispersion (OAP) had a solids content of 48.7%. The S/mil was measured to be 1.03 with collapse of 0.0%.

Comparative Example 2 - Preparation of non-AN Functionalized OAP with 4-Hydroxy TEMPO Inhibition

A 5-liter, four necked round bottom flask was equipped a paddle stirrer, thermometer, $N_2$ inlet and reflux condenser. DI water (475 g) was added to the flask and heated to 89 °C under $N_2$. NaPS (1.38 g in 30 g water) was added to the flask immediately followed by Core #1 (125 g). ME 1, which was prepared by mixing DI water (40.0 g), FES-32 emulsifier (3.0 g), styrene (40.0 g), methacrylic acid (4.8 g), and methyl methacrylate (35.2 g), was then added to the flask over 40 min at a constant temperature range of 77 °C to 79 °C. Upon completion of ME 1 addition, ME 2, which was prepared by mixing DI water (110.0 g), FES-32 emulsifier (8.66 g), styrene (264.0 g), methacrylic acid (7.2 g), linseed oil fatty acid (2.4 g), methyl methacrylate (192.0 g), and trimethylolpropane trimethacrylate (16.8 g), was then added to the flask over 40 min with a simultaneous co-feed solution of NaPS (0.4 g in 30 g water) added to the flask over 35 min. The temperature of the reaction mixture was immediately allowed to increase to 84 °C, then allowed to increase to 92 °C after 15 min. Upon completion of the ME 2 feed, the reaction was cooled to 50 °C.

When the contents of the flask reached 80 °C., an aqueous mixture of ferrous sulfate and EDTA (20 g, 0.1 wt. % $FeSO_4$, and 2 g, 1 wt. % EDTA) was added to the flask. When the contents of the flask temperature reached 50 °C, co-feeds including a solution of *t*-BHP (1.9 g) and NaPS (5.0 g) mixed with DI water (100 g), along with a separate solution of IAA (2.6 g in 100 g water) were both added simultaneously to the flask at 1.2 g/min. Two min after the start of charging the co-feed solutions, ME 3, which was prepared by mixing DI water (240 g), FES-32 emulsifier (17.0 g), *n*-butyl acrylate (431.4 g), methyl methacrylate (430.6 g), 2-ethylhexyl acrylate (124.4 g), acetoacetoxyethyl methacrylate (25.5 g) and methacrylic acid (8.0 g), was added to the flask over 55 min while allowing the temperature to rise to 86 °C without providing any external heat. Upon completion of ME 3 addition, the co-feed solutions were stopped and the batch was held for 5 min at 80 °C to 86 °C. A solution of $NH_4OH$ (5 g, 28 wt. % aq.) mixed with DI water (5.0 g) was then added to the flask along with hot (90 °C) DI water (175 g).

ME 4, which was prepared by mixing DI water (54.0 g), FES-32 emulsifier (3.0 g), *n*-butyl acrylate (104.4 g), methyl methacrylate (75.6 g), and 4-hydroxy TEMPO (3.0 g), was fed to the flask over 5 min. Immediately after the ME 4 feed addition was complete, $NH_4OH$ (35.0 g, 28 wt. % aq.) mixed with DI water (35 g) was added to the flask over 2 min. When $NH_4OH$ addition was complete, the batch was held for 5 min. The addition the co-feed solutions was resumed at 1.2 g/min until completion, whereupon the dispersion was cooled to 25 °C. While cooling, additional co-feeds including a solution of *t*-BHP (1.5 g) in DI water (25 g), along with a separate solution of IAA (0.7 g) in water (25 g) were both added simultaneously to the flask at a rate of 1.3 g/min. Upon completion of addition of the second co-feed, the dispersion was filtered to remove any coagulum. The filtered opaque acrylic dispersion (OAP) had a solids content of 48.1%. The S/mil was measured to be 1.73 with collapse of 7.4%.

Example 1 - Preparation of OAP without Polymerization Inhibitor

A 5-liter, four necked round bottom flask was equipped a paddle stirrer, thermometer, $N_2$ inlet and reflux

condenser. DI water (600 g) was added to the flask and heated to 89 °C under $N_2$. NaPS (2 g in 40 g water) was added to flask immediately followed by Core #1 (125 g). ME 1, which was prepared by mixing DI water (150 g), FES-32 emulsifier (11.5 g), styrene (414.0 g), linseed oil fatty acid (2.5 g), methyl methacrylate (159.0 g), and trimethylolpropane trimethacrylate (18.0 g), was then added to the flask over 45 min. The temperature of the reaction mixture was allowed to increase to 90 °C after 15 min. Two minutes after the start of ME 1 addition, a solution of acrylic acid (9.0 g) in DI water (85 g) was added to the flask. Upon completion of the ME 1 feed, the reaction was cooled to 60 °C.

When the contents of the flask reached 80 °C, an aqueous mixture of ferrous sulfate and EDTA (20 g, 0.1 wt. % $FeSO_4$, and 2 g, 1 wt. % EDTA) was added to the flask. When the contents of the flask reached 60 °C, co-feeds including a solution of *t*-BHP (1.9 g) and NaPS (5.0 g) mixed with DI water (100 g), along with a separate solution of IAA (2.6 g) in DI water (55 g) were both added simultaneously to the flask over 94 min. Two minutes after the start of charging the co-feed solutions, ME 2, which was prepared by mixing DI water (290 g), FES-32 emulsifier (20.0 g), butyl acrylate (720.0 g), methyl methacrylate (445.8 g), acetoacetoxyethyl methacrylate (25.2 g) and methacrylic acid (9.0 g), was added to the flask over 72 min while allowing the temperature to rise to 85 °C without providing any external heat. Forty-five minutes after the start of ME 2 feeds, $NH_4OH$ (1.0 g, 28 wt. % aq.) was added to the IAA co-feed solution and $NH_4OH$ (50.0 g, 28 wt. % aq.) mixed with DI water (50 g) was added to the flask over 20 min. Upon completion all feeds, the batch was held for 10 min at 80 ° C to 85°C.

Upon completion of the hold, additional co-feeds including a solution of t-BHP (1.5 g) in DI water (10 g), along with a separate solution of IAA (0.7 g) and sodium carbonate (0.3 g) in water (21 g) were both added simultaneously to the flask over 30 min. Upon completion of addition of the second co-feed, the emulsion was cooled to 25°C. The dispersion was filtered to remove any coagulum. The filtered opaque acrylic dispersion (OAP) had a solids content of 49.9%. The S/mil was measured to be 1.39 with collapse of 4.2%.

Example 2 - Preparation of non-AN Functionalized OAP without Polymerization Inhibitor

A 5-liter, four-necked round bottom flask was equipped a paddle stirrer, thermometer, $N_2$ inlet and reflux condenser. DI water (600 g) was added to the flask and heated to 89 °C under $N_2$. NaPS (2 g in 40 g water) was added to flask immediately followed by Core #1 (125 g). ME 1, which was prepared by mixing DI water (150 g), FES-32 emulsifier (17.25 g), styrene (414.0 g), linseed oil fatty acid (2.5 g), methyl methacrylate (159.0 g), and trimethylolpropane trimethacrylate (18.0 g), was then added to the flask over 45 min. The temperature of the reaction mixture was allowed to increase to 84 °C after 30 min and allowed to increase to 92 °C after 45 min. Two minutes after the start of ME 1 addition, a solution of acrylic acid (9.0 g) in DI water (85 g) was added to the flask. Upon completion of the ME 1 feed, the reaction was cooled to 60 °C.

When the contents of the flask reached 80 °C, an aqueous mixture of ferrous sulfate and EDTA (20 g, 0.1 wt. % $FeSO_4$, and 2 g, 1 wt. % EDTA) was added to the flask. When the contents of the flask reached 60 °C, co-feeds including a solution of t-BHP 1.9 g and NaPS (5.0 g) mixed with DI water (100 g), along with a separate solution of IAA, 2.6 g in DI water (55 g) were both added simultaneously to the flask over 74 min. Two minutes after the start of charging the co-feed solutions, ME 2, which was prepared by mixing DI water (290 g), FES-32 emulsifier (30.0 g), n-butyl acrylate (720.0 g), methyl methacrylate (445.8 g), acetoacetoxyethyl methacrylate (25.2 g) and methacrylic acid (9.0 g), was added to the flask over 72 min while allowing the temperature of the contents to rise to 85 °C without providing any external heat. Forty-five minutes after the start of ME 2 feeds, $NH_4OH$ (1.0 g, 28 wt. % aq.) was added to the IAA co-feed solution and $NH_4OH$ (50.0 g, 28 wt. % aq.) mixed with DI water (50 g) was added to the flask over 20 min. Upon completion of all feeds, the batch was held for 10 min at 80 °C to 85°C.

Upon completion of the hold, additional co-feeds including a solution of t-BHP (1.5 g) in DI water (10 g), along with a separate solution of IAA (0.7 g) and sodium carbonate (0.3 g) in water (21 g) were both added simultaneously to the flask over 30 min. Upon completion of addition of the second co-feed, the emulsion was cooled to 25 °C. The dispersion was filtered to remove any coagulum. The filtered opaque acrylic dispersion (OAP) had a solids content of 49.6%. The S/mil was measured to be 1.29 with collapse of 8.1%.

The batch times for the examples 1 and 2 of the present invention were, respectively, approximately 1.5 and 1.7 hours shorter than the batch times of the comparative examples. Moreover, batch capacity was increased by 38% in each case, while providing OAPs with acceptable collapse and a targeted S/mil of > 1.2.

## Claims

**1.** A method for preparing an aqueous dispersion of opacifying pigment-binder hybrid particles comprising the steps of a) contacting under aqueous emulsion polymerization conditions carboxylic acid functionalized core polymer particles with one or more first ethylenically unsaturated monomers to form an aqueous dispersion of core-shell polymer particles; b) chasing residual first ethylenically unsaturated monomers with a chasing agent; c) gradually adding to the

dispersion of core-shell polymer particles under emulsion polymerization conditions i) second ethylenically unsaturated monomers from a first vessel; and ii) a base from a second vessel to form a dispersion of pigment-binder hybrid polymer particles; wherein the addition of the base is initiated after the onset of the addition of the second ethylenically unsaturated monomers, and completed before the completion of the addition of the second ethylenically unsaturated monomers; wherein step c) is carried out without inhibition of polymerization.

2. The method of Claim 1 wherein the carboxylic acid functionalized core comprises, based on the weight of structural units of monomers in the core, from 20 to 60 weight percent structural units of a carboxylic acid monomer, and 40 to 80 weight percent structural units of a nonionic monoethylenically unsaturated monomer.

3. The method of Claim 2 wherein the carboxylic acid functionalized core comprises, based on the weight of structural units of monomers in the core, from 30 to 40 weight percent structural units of a carboxylic acid monomer, and 60 to 70 weight percent structural units of a nonionic monoethylenically unsaturated monomer, wherein the nonionic monoethylenically unsaturated monomer is methyl methacrylate.

4. The method Claim 3 wherein the first ethylenically unsaturated monomers are one or more monomers selected from the group consisting of methyl methacrylate, styrene, $\alpha$-methylstyrene, isobornyl methacrylate, lauryl methacrylate, and cyclohexyl methacrylate.

5. The method of Claim 4 wherein the second ethylenically unsaturated monomers form a binder layer with a calculated $T_g$ in the range of from -20 °C to 35° C.

6. The method of Claim 5 wherein the second ethylenically unsaturated monomers comprise methyl methacrylate, and one or more acrylates selected from the group consisting of methyl acrylate, ethyl acrylate, n-butyl acrylate, and 2-ethylhexyl acrylate.

7. The method of Claim 5 wherein the first ethylenically unsaturated monomers comprise from 70 to 94 weight percent styrene, from 2 to 25 weight percent acrylonitrile, from 0.5 to 3 weight percent acrylic acid or methacrylic acid, and from 0.5 to 5 weight percent of a diethylenically unsaturated monomer.

8. The method of Claim 6 wherein the first ethylenically unsaturated monomers comprise methyl methacrylate and styrene at a weight-to-weight ratio of from 35:65 to 55:45 and from 0.5 to 5 weight percent trimethylolpropane trimethacrylate, wherein methyl methacrylate and styrene comprise at least 90 weight percent of the first ethylenically unsaturated monomers.

9. The method of Claim 8 wherein the second ethylenically unsaturated monomer further comprise acetoacetoxyethyl methacrylate and a carboxylic acid monomer, wherein the addition of base is initiated between 15 and 60 minutes after the onset of addition of the second ethylenically unsaturated monomers, wherein the base is NaOH, KOH, or $NH_4OH$.

## Patentansprüche

1. Verfahren zum Herstellen einer wässrigen Dispersion von deckenden Pigment-Bindemittel-Hybridpartikeln, umfassend die Schritte a) Inkontaktbringen, unter Bedingungen einer wässrigen Emulsionspolymerisation, von carbonsäurefunktionalisierten Kernpolymerpartikeln mit einem oder mehreren ersten ethylenisch ungesättigten Monomeren, um eine wässrige Dispersion von Kern-Hülle-Polymerpartikeln auszubilden; b) Austreiben der restlichen ersten ethylenisch ungesättigten Monomere mit einem Austreibmittel; c) allmähliches Zugeben zu der Dispersion von Kern-Hülle-Polymerpartikeln unter Emulsionspolymerisationsbedingungen von i) zweiten ethylenisch ungesättigten Monomeren aus einem ersten Gefäß; und ii) einer Base aus einem zweiten Gefäß, um eine Dispersion aus Pigment-Bindemittel-Hybridpolymerpartikeln auszubilden; wobei die Zugabe der Base nach dem Beginn der Zugabe der zweiten ethylenisch ungesättigten Monomere eingeleitet und vor der Beendigung der Zugabe der zweiten ethylenisch ungesättigten Monomere abgeschlossen wird; wobei Schritt c) ohne Hemmung der Polymerisation durchgeführt wird.

2. Verfahren nach Anspruch 1, wobei der mit Carbonsäure funktionalisierte Kern, bezogen auf das Gewicht von Struktureinheiten von Monomeren in dem Kern, von zu 20 bis 60 Gewichtsprozent Struktureinheiten eines Carbonsäuremonomers und zu 40 bis 80 Gewichtsprozent Struktureinheiten eines nichtionischen, monoethylenisch ungesättigten Monomers umfasst.

3. Verfahren nach Anspruch 2, wobei der mit Carbonsäure funktionalisierte Kern, bezogen auf das Gewicht der Struktureinheiten der Monomere in dem Kern, von zu 30 bis 40 Gewichtsprozent Struktureinheiten eines Carbonsäuremonomers und zu 60 bis 70 Gewichtsprozent Struktureinheiten eines nichtionischen monoethylenisch ungesättigten Monomers umfasst, wobei das nichtionische monoethylenisch ungesättigte Monomer Methylmethacrylat ist.

4. Verfahren nach Anspruch 3, wobei die ersten ethylenisch ungesättigten Monomere ein oder mehrere Monomere sind, ausgewählt aus der Gruppe bestehend aus Methylmethacrylat, Styrol,$\alpha$ -Methylstyrol, Isobornylmethacrylat, Laurylmethacrylat und Cyclohexylmethacrylat.

5. Verfahren nach Anspruch 4, wobei die zweiten ethylenisch ungesättigten Monomere eine Bindemittelschicht mit einer berechneten $T_g$ in dem Bereich von -20 °C bis 35 °C ausbilden.

6. Verfahren nach Anspruch 5, wobei die zweiten ethylenisch ungesättigten Monomere Methylmethacrylat und ein oder mehrere Acrylate umfassen, ausgewählt aus der Gruppe bestehend aus Methylacrylat, Ethylacrylat, N -Butylacrylat und 2-Ethylhexylacrylat.

7. Verfahren nach Anspruch 5, wobei die ersten ethylenisch ungesättigten Monomere von zu 70 bis 94 Gewichtsprozent Styrol, von zu 2 bis 25 Gewichtsprozent Acrylnitril, von zu 0,5 bis 3 Gewichtsprozent Acrylsäure oder Methacrylsäure und von zu 0,5 bis 5 Gewichtsprozent eines diethylenisch ungesättigten Monomers umfassen.

8. Verfahren nach Anspruch 6, wobei die ersten ethylenisch ungesättigten Monomere Methylmethacrylat und Styrol in einem Gewichtsverhältnis von 35 : 65 bis 55 : 45 und von zu 0,5 bis 5 Gewichtsprozent Trimethylolpropantrimethacrylat umfassen, wobei Methylmethacrylat und Styrol mindestens zu 90 Gewichtsprozent die ersten ethylenisch ungesättigten Monomere umfassen.

9. Verfahren nach Anspruch 8, wobei das zweite ethylenisch ungesättigte Monomer ferner Acetoacetoxyethylmethacrylat und ein Carbonsäuremonomer umfasst, wobei die Zugabe von Base zwischen 15 und 60 Minuten nach Beginn der Zugabe des zweiten ethylenisch ungesättigten Monomers eingeleitet wird, wobei die Base NaOH, KOH oder $NH_4OH$ ist.

**Revendications**

1. Procédé permettant de préparer une dispersion aqueuse de particules hybrides pigment-liant opacifiant comprenant les étapes consistant à a) mettre en contact, dans des conditions de polymérisation en émulsion aqueuse, de particules de polymère noyau fonctionnalisé à l'acide carboxylique avec un ou plusieurs premiers monomères éthyléniquement insaturés pour former une dispersion aqueuse de particules de polymère noyau-coquille ; b) graver les premiers monomères résiduels éthyléniquement insaturés à l'aide d'un agent de gravure ; c) ajouter progressivement à la dispersion de particules de polymère noyau-coquille dans des conditions de polymérisation en émulsion i) des seconds monomères éthyléniquement insaturés provenant d'un premier récipient ; et ii) une base provenant d'un second récipient pour former une dispersion de particules de polymère hybride pigment-liant ; dans lequel l'addition de la base est initiée après le début de l'addition des seconds monomères éthyléniquement insaturés, et terminée avant la fin de l'addition des seconds monomères éthyléniquement insaturés ; dans lequel l'étape c) est réalisée sans inhibition de polymérisation.

2. Procédé selon la revendication 1, dans lequel le noyau fonctionnalisé à l'acide carboxylique comprend, sur la base du poids des motifs structurels de monomères dans le noyau, de 20 à 60 % en poids de motifs structurels d'un monomère d'acide carboxylique, et de 40 à 80 % en poids de motifs structurels d'un monomère non ionique monoéthylèniquement insaturé.

3. Procédé selon la revendication 2, dans lequel le noyau fonctionnalisé à l'acide carboxylique comprend, sur la base du poids des motifs structurels de monomères dans le noyau, de 30 à 40 % en poids de motifs structurels d'un monomère d'acide carboxylique, et de 60 à 70 % en poids de motifs structurels d'un monomère non ionique monoéthyléniquement insaturé, dans lequel le monomère non ionique monoéthyléniquement insaturé est le méthacrylate de méthyle.

4. Procédé selon la revendication 3, dans lequel les premiers monomères éthyléniquement insaturés sont un ou

plusieurs monomères choisis dans le groupe constitué de méthacrylate de méthyle, styrène, α-méthylstyrène, méthacrylate d'isobornyle, méthacrylate de lauryle et méthacrylate de cyclohexyle.

**5.** Procédé selon la revendication 4, dans lequel les seconds monomères éthyléniquement insaturés forment une couche de liant dont une $T_g$ calculée est comprise entre -20 °C et 35 °C.

**6.** Procédé selon la revendication 5, dans lequel les seconds monomères éthyléniquement insaturés comprennent du méthacrylate de méthyle et un ou plusieurs acrylates choisis dans le groupe constitué d'acrylate de méthyle, acrylate d'éthyle, acrylate de n-butyle et acrylate de 2-éthylhexyle.

**7.** Procédé selon la revendication 5, dans lequel les premiers monomères éthyléniquement insaturés comprennent de 70 à 94 % en poids de styrène, de 2 à 25 % en poids d'acrylonitrile, de 0,5 à 3 % en poids d'acide acrylique ou d'acide méthacrylique, et de 0,5 à 5 % en poids d'un monomère diéthyléniquement insaturaté.

**8.** Procédé selon la revendication 6, dans lequel les premiers monomères éthyléniquement insaturés comprennent du méthacrylate de méthyle et du styrène dans un rapport poids/poids de 35:65 à 55:45 et de 0,5 à 5 % en poids de triméthylolpropane de triméthacrylate, dans lequel le méthacrylate de méthyle et le styrène comprennent au moins 90 % en poids des premiers monomères éthyléniquement insaturés.

**9.** Procédé selon la revendication 8, dans lequel le second monomère éthyléniquement insaturé comprend en outre du méthacrylate d'acétoacétoxyéthyle et un monomère d'acide carboxylique, dans lequel l'addition de la base est initiée entre 15 et 60 minutes après le début de l'addition des seconds monomères éthyléniquement insaturés, dans lequel la base est NaOH, KOH, ou $NH_4OH$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6020435 A
- US 10919999 B
- US 7629414 B2
- WO 2021225769 A